# EUROPEAN PATENT SPECIFICATION

(11) **EP 2 965 062 B1**
(45) Date of publication and mention of the grant of the patent: **12.12.2018**
(21) Application number: 14701615.8
(22) Date of filing: 27.01.2014
(51) Int. Cl.: G01N 17/04, B65D 90/10, E02B 17/00

(54) **APPARATUS AND METHOD FOR PROTECTING A STRUCTURAL MEMBER**
VORRICHTUNG UND VERFAHREN ZUM SCHUTZ EINES STRUKTURELEMENTS
DISPOSITIF ET PROCÉDÉ POUR PROTÉGER UN MEMBRE STRUCTUREL

(30) Priority: 07.03.2013 GB 201304120
(43) Date of publication of application: 13.01.2016
(60) Divisional application: 18204728.2
(73) Proprietor: Winn&Coales (Denso) Limited, London, Greater London SE27 0TR (GB)
(72) Inventor: PEARCE, Steven, Findon Village West Sussex BN14 0UE (GB); TONKS, Adrian, Crystal Palace Greater London SE19 2LT (GB); CRAWLEY, Steven, Ashford Kent TN23 5LH (GB); LEHRI, Muhammed, West Ealing Greater London W13 9HT (GB); THOMSON, John, Greater London SE5 8LH (GB)
(74) Representative: Boult Wade Tennant LLP
(86) International application number: PCT/GB2014/050202
(87) International publication number: WO 2014/135839

(56) References cited:
- WO-A1-97/44610
- "SeaShield Protection for Milford Haven Jetty Piles", DENSO DIGEST, vol. 26, no. 3, 28 February 2006 (2006-02-28), pages 1-11, XP055108625,
- "Seashield Series 250HD System for Pile Protection: Application instructions", , 26 October 2010 (2010-10-26), pages 1-4, XP055108633, Retrieved from the Internet: URL:http://densoaustralia.com.au/pdf/AI - Denso Seashield Series 250HD Systems.pdf [retrieved on 2014-03-18]

## Description

### FIELD OF INVENTION

The invention relates to a method of, and apparatus for, protecting structural members from corrosion.

Corrosion protection systems are commonly used to protect structural members from corrosion in aquatic environments. Aquatic environments include the marine, limnal, estuarine, paludal and riverine environments.

### BACKGROUND OF THE INVENTION

Structures, such as piers, mooring dolphins, berthing dolphins, jetties and platforms are typically constructed using structural members. The form of the Structural members is varied and includes, but is not limited to, tubular, cylindrical and hexagonal prism forms. Such Structural members can be constructed in wood, steel, cast iron or concrete. Under conditions of saltwater or freshwater immersion, or exposure, the member can be protected against corrosion by the application of a corrosion protection system. The use of a protective coating system is particularly common where the structural members form the structural support for a superstructure for example, the piles supporting a pier. A protective coating system can be used to protect the entire surface of a structural member. Alternatively, a protective coating system can be used to protect a portion of the surface of a structural member. The practise of protecting only a portion of the surface of a structural member is particularly relevant when corrosion is localised to a particular section of the structural member, for example near the waterline or within the splash zone. Some examples of these protective coating systems can be seen at SeaShield.com . These systems comprise an inner corrosion protection layer and an outer mechanically protective layer. The inner corrosion protection layer comprises chemical substances or preparations impregnated onto and into a fabric or cloth to form a tape. Such materials are well known in the art. Such material can be conveniently applied in roll form to the surface of the structural member in a single continuous or substantially continuous process. In contrast, the mechanically protective layer is in a sheet form and is conveniently installed in a modular manner. Depending on the protected length, installation can be achieved either as a single module or as a plurality of modules. Where a plurality of modules is required these are positioned contiguously along the structural member. Adjacent modules abut or more preferably overlap to form a continuous assembly. The modules are typically of a standardised length. The length of the module is defined as the dimension parallel with the major axis of the structural member. This outer layer prevents the ingress of nutrient rich water that could support microbiological organisms that could in turn support Microbiologically Induced Corrosion. Prevention of ingress of water is conveniently achieved by ensuring that components of the corrosion protection system are manufactured from components that are waterproof or substantially waterproof. Prevention of ingress of water is further achieved by ensuring that the outer layer is under circumferential stress and impinges radially on the inner layer, thereby excluding any possible route for water ingress. The circumferential stress is imparted by installing the module whilst under strain and the stress is maintained by the use of suitable fixing applied to the terminal ends of the module. Such modular mechanically protective layers are well known in the art. While this arrangement is very effective it is occasionally necessary for asset owners to inspect the surface of the structural member or inner corrosion protection layer. Such inspections are used to confirm that no water ingress has occurred and that Microbially Induced Corrosion and/or other forms of corrosion are not present. This inspection normally entails the destructive removal of the outer mechanical protection layer and the inner corrosion protection layer. The underlying surface of the structural member can then be exposed to allow inspection. This method, while effective, is time consuming, and can necessitate replacement of inner corrosion protection layer and outer mechanically protective layer damaged during removal. Furthermore, by removing the entire system, the surface is exposed to microbiological contamination from the environment. Such contamination negates the effectiveness of any subsequent microbiological sampling and investigation.

The outer mechanically protective layer can be adapted to facilitate inspection for example by reducing the overall length of one or more of the modules to facilitate convenient removal and reduce the cost of the replacement module. Notwithstanding such adaptation, the following problems remain. Several persons are still required to remove the reduced-length module. Encrusted marine growth at the junction between adjacent modules can hinder removal.

The length of the reduced-length module cannot be made arbitrarily small, the minimum length being determined by the tools and fittings available for installation.

Furthermore, modules of mixed length are generally more inconvenient to place and install. Retro-fitting of reduced length modules within an existing contiguous assembly of standard length modules is highly inconvenient because the reduced length modules does not span the full distance between adjacent modules and additional measures must be taken to make good the unprotected portion. If modules are installed relative to a fixed datum, for example the soffit of the superstructure, the adjacent modules may require substantial modification or judicious placement to ensure that the reduced length module is positioned at the required location. Therefore there exists a need for an improved method.

WO 97/4460 describes an access plug for obstructing and sealing an inspection porthole in the wall of insulation surrounding a flow pipe.

### SUMMARY OF THE INVENTION

Accordingly, the present invention can provide a method of inspecting the condition of the member without the need for destructive removal of protective layers such as the corrosion prevention layer and the mechanical protection layer.

The present invention provides therefore a method of protecting a structural member from corrosion according to independent claims 1 and 2 and a corresponding structural component according to independent claim 11. Preferred embodiments of the invention are set in the dependent claims.

Embodiments of the invention can minimise the contamination of the structure by minimising the exposure of the structure to the surrounding environment.

Embodiments of the invention provides a means of inspecting the structure that is non-destructive to the protection system.

Embodiments of the invention can be reusable for the lifespan of the protection system.

Embodiments of the invention can be located in a fixed point which will give a fixed datum point for repeat inspections, such as year on year wall thickness loss.

Embodiments of the invention can be retrofitted to an existing structure.

### BRIEF DESCRIPTION OF THE FIGURES

Figure 1 shows an exploded view of a first embodiment.
Figure 2 shows an exploded view of a second embodiment.

### DETAILED DESCRIPTION

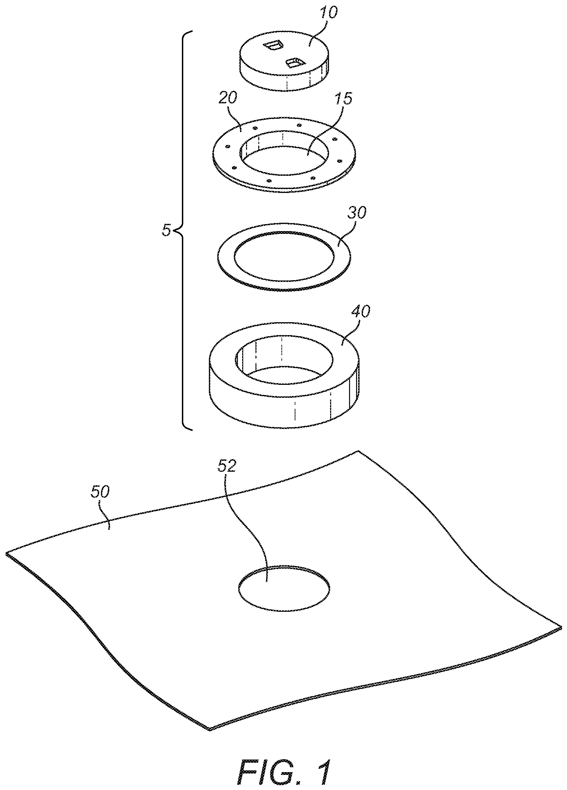

Figure 1 shows an exploded view of a first embodiment of a system for protecting a structural member from corrosion.

The system comprises a protective layer 50. The protective layer 50 is formed on the surface of a structural member. The protective layer comprises a corrosion protection layer formed on the structural member and a mechanical protection layer formed on the corrosion protection layer.

The protective layer 50 has formed therein an opening 52.

A cover assembly 5 is provided to prevent the structural member from being exposed to corrosion via the opening 52.

The cover assembly 5 is mounted on the protective layer. The cover assembly 5 surrounds the opening 52.

The cover assembly 5 comprises a cover body 40 mounted to the protective layer.

The cover body 40 comprises the same material as the mechanical protection layer.

The cover assembly 5 comprises an aperture 15 and an interfitting closure member 10 arranged to interfit with the aperture 15.

The interfitting closure member 10 and the aperture 15 may have complementary tapered outer surfaces (i.e. narrowing towards the structural member).

The interfitting closure member 10 may have a male screw thread formed on its outer surface and the aperture 15 may have a corresponding female screw thread on its inner surface. Accordingly, the screw threads may mesh in order to engage the member 10 to close the aperture 15.

Preferably, the body 40 comprises a flanged cylinder 20.
The female thread may be provided on the cylindrical portion of the flanged cylinder 20. The cylindrical portion of the flanged cylinder 20 is arranged to slide into a hole through the body 40. The flanged portion of the flanged cylinder 20 can be used to mount the flanged cylinder 20 to the body 40 by way of fixing means such as screws.

Preferably, a gasket 30 may be provided between the flanged cylinder 20 and the body 40 to prevent leakage between the flanged cylinder 20 and the body 40.

A handle, or finger holes may be provided on the outer surface of the interfitting closure member 10 to aid removal thereof from the aperture 15.

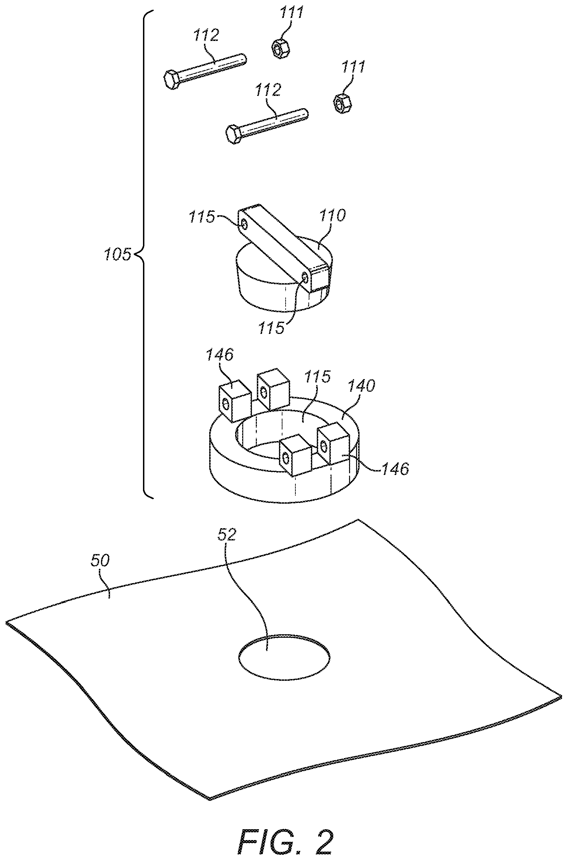

Figure 2 shows an exploded view of a second embodiment of a system for protecting a structural member from corrosion.

In common with the first embodiment, the protective layer 50 is provided, along with an aperture.

However, in this embodiment a cover assembly 105 is provided with a different construction.

The cover assembly 105 is mounted on the protective layer, surrounding the opening 52.

The cover assembly 105 comprises a body 140 mounted to the protective layer.

The body 140 comprises the same material as the mechanical protection layer.

Preferably, the cover assembly 105 comprises an aperture 115 and an interfitting closure member 110 arranged to interfit with the aperture 115.

The interfitting closure member 110 and the aperture 115 may have complementary tapered outer surfaces (i.e. narrowing towards the structural member).

The interfitting closure member 110 may be a simple plug that interfits with the aperture 115. The interfitting closure member 110 may be mounted using a hinge. This can aid the engagement of the interfitting closure member 110 with the aperture 115 by ensuring alignment of the two parts.

Preferably, the hinge comprises at least one barrel on the interfitting closure member 110 and at least one barrel on the body 140. The barrels may be rotatably connected using one or more bolts 111, 112, rivets or pins.

A handle, or finger holes may be provided on the outer surface of the interfitting closure member 110 to aid removal thereof from the aperture 115.

In either of the first or second embodiments, removable corrosion-resistant tape may be used to cover the opening 52 within the cover assembly 5, 105. A compressible material can optionally be provided to fill any space between the interfitting closure member 10, 110 and the structural assembly, and to hold the tape in place.

In either of the first or second embodiments, the body has a maximum dimension of less than 300 mm.

### EXAMPLE

Petrolatum tape is used for the corrosion prevention layer of the corrosion protection system and is well known in the art. The outer mechanical protection layer would be made from High Density Polyethylene (HDPE) and is well known in the art. The boss would also be made from HDPE. This would allow the boss to be fitted to the outer mechanical protection layer by means of plastic welding. Once the boss is fitted to the outer mechanical protection layer the female thread can be fitted to the boss. This is done using fasteners suitable for the marine environment, usually A4 316 Stainless Steel Screws. It is ensured that the gasket seal is in place before the thread is fixed to the boss. This gasket does not use fixings of its own but is held in place by the fixings used to secure the thread to the boss. The preferred diameter of the opening is 100mm. The preferred height of the boss is 30mm. This ratio of height to diameter provides a conveniently sized aperture for inspection and a sheltered or substantially sheltered aperture to prevent contamination during inspection.

The use of petrolatum tape as the corrosion prevention layer allows for inspection by means of cutting the petrolatum tape in order to expose the surface of the structure. This area can be repaired by replacing the cut back area of tape and applying petrolatum paste to the cuts in the tape. When the void within the inspection port if filled with petrolatum mastic the area is protected to the same level as before the petrolatum tape was cut.

## Claims

1. A method of protecting a structural member from corrosion, comprising:
covering at least a portion of the structural member with a protective layer (50) for protecting the structural member from corrosion whilst leaving an opening (52) in the protective layer (50), the opening (52) being surrounded by the protective layer (50); and
providing a cover assembly (5) which includes a cover body (40) having an aperture (15) and a closure member (10) arranged to interfit with the aperture (15);
mounting the assembly over the opening (52) and at least a section of the protective layer (50) adjacent the gap (52);
sealing the opening (52) by interfitting the closure member (10) in the aperture (15) to prevent ingress of fluid through the aperture (15) to the structural member; and
allowing inspection of the structural member by removing the closure member (10) from the aperture (15) to provide access to the structural member via the aperture (15) and via the opening (52) in the protective layer (50),
wherein the protective layer (50) comprises a corrosion protection layer formed on the structural member and a mechanical protection layer formed on the corrosion protection layer; and **characterised in that**:
the cover body (40) comprises the same material as the mechanical protection layer.

2. A method of protecting a structural member having a protective layer (50) for protecting the structural member from corrosion covering at least a portion thereof, comprising:
forming an opening (52) in the protective layer (50), the opening (52) being surrounded by the protective layer (50);
providing a cover assembly (5) which includes a cover body (40) having an aperture (15) and a closure member (10) arranged to interfit with the aperture (15);
mounting the assembly over the opening (52) and at least a section of the protective layer (50) adjacent the opening (52);
sealing the opening (52) by interfitting the closure member (10) in the aperture (15) to prevent ingress of fluid through the aperture (15) to the structural member; and
allowing inspection of the structural member by removing the closure member (10) from the aperture (15) to provide access to the structural member via the aperture (15) and via the opening (52) in the protective layer (50),
wherein the protective layer (50) comprises a corrosion protection layer formed on the structural member and a mechanical protection layer formed on the corrosion protection layer; and **characterised in that**:
the cover body (40) comprises the same material as the mechanical protection layer.

3. The method of claim 1 or claim 2, wherein the interfitting closure member (10) has a male screw thread on an outer surface thereof and the aperture (15) has a female screw thread on the inner surface thereof arranged to mesh with the male screw thread.

4. The method of any preceding claim, wherein the interfitting closure member (10) is mounted on the cover body (40) using a hinge.

5. The method of any preceding claim, wherein the interfitting closure member (10) and the aperture (15) have complementary tapered outer surfaces.

6. The method of any preceding claim, wherein the structural member is one or more of: a pile for supporting a pier.

7. The method of any preceding claim, wherein the structural member is situated in an aquatic environment.

8. A method of claim 1, wherein the outer mechanical protection layer remains substantially in situ during inspection of the underlying structural member.

9. The method of any preceding claim, wherein the cover body has a maximum dimension of less than 300mm.

10. The method of any preceding claim, wherein the cover body (40) is fixed to the protective layer (50) by means of: frictional welding; thermal welding; bonding; gluing; or strapping.

11. A structural component comprising:
a structural member;
a protective layer (50) for protecting the structural member from corrosion, the protective layer (50) covering at least a portion of the structural member, wherein the protective layer (50) includes an opening (52), the opening (52) being surrounded by the protective layer (50); and
a cover assembly (5) mounted over the opening (52) and at least a section of the protective layer (50) adjacent the opening (52),
wherein:
the cover assembly (5) includes a cover body (40) having an aperture (15) and a closure member (10) arranged to interfit with the aperture (15);
the closure member (10) is interfitable with the aperture (15) for preventing ingress of fluid through the gap (52) to the structural member; and
the closure member (10) is removable from the aperture (15) for providing access to the structural member via the opening (52) in the protective layer (50),
wherein the protective layer (50) comprises a corrosion protection layer formed on the structural member and a mechanical protection layer formed on the corrosion protection layer; and **characterised in that**:
the cover body (40) comprises the same material as the mechanical protection layer.

## Patentansprüche

1. Verfahren zum Schützen eines strukturellen Elements vor Korrosion, umfassend:
Bedecken von wenigstens einem Abschnitt des strukturellen Elements mit einer Schutzschicht (50) zum Schützen des strukturellen Elements vor Korrosion, wobei eine Öffnung (52) in der Schutzschicht (50) verbleibt, wobei die Öffnung (52) von der Schutzschicht (50) umgeben ist; und
Bereitstellen einer Abdeckanordnung (5), welche einen Abdeckkörper (40) mit einem Durchlass (15) und einem Schließelement (10) umfasst, welches dazu eingerichtet ist, mit dem Durchlass (15) einzupassen;
Anbringen der Anordnung über der Öffnung (52) und wenigstens einem Abschnitt der Schutzschicht (50) benachbart zu dem Spalt (52);
Abdichten der Öffnung (52) durch Einpassen des Schließelements (10) in dem Durchlass (15), um ein Eintreten von Fluid durch den Durchlass (15) zu dem strukturellen Element zu verhindern; und
Erlauben einer Inspektion des strukturellen Elements durch Entfernen des Schließelements (10) von dem Durchlass (15), um einen Zugang zu dem strukturellen Element mittels des Durchlasses (15) und mittels der Öffnung (52) in der Schutzschicht (50) bereitzustellen,
wobei die Schutzschicht (50) eine Korrosions-Schutzschicht umfasst, welche an dem strukturellen Element gebildet ist, sowie eine mechanische Schutzschicht,
welche an der Korrosions-Schutzschicht gebildet ist; und **dadurch gekennzeichnet, dass**:
der Abdeckkörper (40) dasselbe Material wie die mechanische Schutzschicht umfasst.

2. Verfahren zum Schützen eines strukturellen Elements mit einer Schutzschicht (50) zum Schützen des strukturellen Elements vor Korrosion, welche wenigstens einen Abschnitt davon bedeckt, umfassend:
Bilden einer Öffnung (52) in der Schutzschicht (50), wobei die Öffnung (52) von der Schutzschicht (50) umgeben ist;
Bereitstellen einer Abdeckanordnung (5), welche einen Abdeckkörper (40) mit einem Durchlass (15) und einem Schließelement (10) umfasst, welches dazu eingerichtet ist, mit dem Durchlass (15) einzupassen;
Anbringen der Anordnung über der Öffnung (52) und wenigstens einem Abschnitt der Schutzschicht (50) benachbart zu der Öffnung (52);
Abdichten der Öffnung (52) durch Einpassen des Schließelements (10) in dem Durchlass (15), um ein Eintreten von Fluid durch den Durchlass (15) zu dem strukturellen Element zu verhindern; und
Erlauben einer Inspektion des strukturellen Elements durch Entfernen des Schließelements (10) von dem Durchlass (15), um einen Zugang zu dem strukturellen Element mittels des Durchlasses (15) und mittels der Öffnung (52) in der Schutzschicht (50) bereitzustellen,
wobei die Schutzschicht (50) eine Korrosions-Schutzschicht, welche an dem strukturellen Element gebildet ist, sowie eine mechanische Schutzschicht umfasst, welche an der Korrosions-Schutzschicht gebildet ist; und **dadurch gekennzeichnet, dass**:
der Abdeckkörper (40) dasselbe Material umfasst wie die mechanische Schutzschicht.

3. Verfahren nach Anspruch 1 oder Anspruch 2, wobei das eingepasste Schließelement (10) ein männliches Schraubgewinde an einer Außenfläche davon aufweist und der Durchlass (15) ein weibliches Schraubgewinde an der Innenfläche davon aufweist, welches dazu eingerichtet ist, mit dem männlichen Schraubgewinde einzugreifen.

4. Verfahren nach einem der vorhergehenden Ansprüche, wobei das eingepasste Schließelement (10) an dem Abdeckkörper (40) unter Verwendung eines Scharniers angebracht ist.

5. Verfahren nach einem der vorhergehenden Ansprüche, wobei das eingepasste Schließelement (10) und der Durchlass (15) komplementär verjüngte Außenflächen aufweisen.

6. Verfahren nach einem der vorhergehenden Ansprüche, wobei das strukturelle Element eines oder mehrere ist aus: einem Pfahl zum Tragen eines Piers.

7. Verfahren nach einem der vorhergehenden Ansprüche, wobei das strukturelle Element in einer Wasserumgebung angeordnet ist.

8. Verfahren nach Anspruch 1, wobei die äußere mechanische Schutzschicht während einer Inspektion des darunterliegenden strukturellen Elements im Wesentlichen in situ verbleibt.

9. Verfahren nach einem der vorhergehenden Ansprüche, wobei der Abdeckkörper eine maximale Abmessung von weniger als 300mm aufweist.

10. Verfahren nach einem der vorhergehenden Ansprüche, wobei der Abdeckkörper (40) an der Schutzschicht (50) befestigt ist durch: Reibungsschweißen; thermisches Schweißen; Bonden; Verkleben; oder Umreifen.

11. Strukturelle Komponente, umfassend:
ein strukturelles Element;
eine Schutzschicht (50) zum Schützen des strukturellen Elements vor Korrosion,
wobei die Schutzschicht (50) wenigstens einen Abschnitt des strukturellen Elements bedeckt, wobei die Schutzschicht (50) eine Öffnung (52) umfasst,
wobei die Öffnung (52) von der Schutzschicht (50) umgeben ist; und
eine Abdeckanordnung (5), welche über der Öffnung (52) und wenigstens einem Abschnitt der Schutzschicht (50) benachbart zu der Öffnung (52) angebracht ist,
wobei:
die Abdeckanordnung (5) einen Abdeckkörper (40) mit einem Durchlass (15) und einem Schließelement (10) umfasst, welches dazu eingerichtet ist, mit dem Durchlass (15) einzupassen;
wobei das Schließelement (10) mit dem Durchlass (15) zum Verhindern eines Eintretens von Fluid durch den Spalt (52) zu dem strukturellen Element einpassbar ist; und
das Schließelement (10) von dem Durchlass (15) zum Bereitstellen eines Zugangs zu dem strukturellen Element mittels der Öffnung (52) in der Schutzschicht (50) entfernbar ist,
wobei die Schutzschicht (50) eine Korrosions-Schutzschicht, welche an dem strukturellen Element gebildet ist, sowie eine mechanische Schutzschicht umfasst, welche an der Korrosions-Schutzschicht gebildet ist; und **dadurch gekennzeichnet, dass**:
der Abdeckkörper (40) dasselbe Material wie die mechanische Schutzschicht umfasst.

## Revendications

1. Procédé de protection d'un élément structurel contre la corrosion, consistant à :
couvrir au moins une partie de l'élément structurel avec une couche de protection (50) pour protéger l'élément structurel contre la corrosion tout en laissant une ouverture (52) dans la couche de protection (50), l'ouverture (52) étant entourée par la couche de protection (50) ; et
fournir un ensemble couvercle (5) qui comporte un corps de couvercle (40) ayant un orifice (15) et un élément de fermeture (10) agencé pour s'emboîter avec l'orifice (15),
monter l'ensemble sur l'ouverture (52) et sur au moins une section de la couche de protection (50) adjacente au trou (52) ;
fermer hermétiquement l'ouverture (52) par emboîtement de l'élément de fermeture (10) dans l'orifice (15) pour empêcher l'entrée de fluide à travers l'orifice (15) dans l'élément structurel ; et
permettre l'inspection de l'élément structurel en retirant l'élément de fermeture (10) de l'orifice (15) pour fournir un accès à l'élément structurel par l'intermédiaire de l'orifice (15) et par l'intermédiaire de l'ouverture (52) dans la couche de protection (50),
dans lequel la couche de protection (50) comprend une couche de protection contre la corrosion formée sur l'élément structurel et une couche de protection mécanique formée sur la couche de protection contre la corrosion ; et **caractérisé en ce que** :
le corps de couvercle (40) comprend le même matériau que la couche de protection mécanique.

2. Procédé de protection d'un élément structurel ayant une couche de protection (50) pour protéger l'élément structurel contre la corrosion couvrant au moins une partie de celui-ci, consistant à :
former une ouverture (52) dans la couche de protection (50), l'ouverture (52) étant entourée par la couche de protection (50) ;
fournir un ensemble couvercle (5) qui comporte un corps de couvercle (40) ayant un orifice (15) et un élément de fermeture (10) agencé pour s'emboîter avec l'orifice (15) ;
monter l'ensemble sur l'ouverture (52) et sur au moins une section de la couche de protection (50) adjacente à l'ouverture (52) ;
fermer hermétiquement l'ouverture (52) en emboîtant l'élément de fermeture (10) dans l'orifice (15) pour empêcher l'entrée de fluide à travers l'orifice (15) dans l'élément structurel ; et
permettre l'inspection de l'élément structurel en retirant l'élément de fermeture (10) de l'orifice (15) pour fournir un accès à l'élément structurel par l'intermédiaire de l'orifice (15) et par l'intermédiaire de l'ouverture (52) dans la couche de protection (50) ;
dans lequel la couche de protection (50) comprend une couche de protection contre la corrosion formée sur l'élément structurel et une couche de protection mécanique formée sur la couche de protection contre la corrosion ; et **caractérisé en ce que** :
le corps de couvercle (40) comprend le même matériau que la couche de protection mécanique.

3. Procédé de la revendication 1 ou la revendication 2, dans lequel l'élément de fermeture par emboîtement (10) a un filetage de vis mâle sur sa surface externe et l'orifice (15) a un filetage de vis femelle sur sa surface interne agencé pour s'engrener avec le filetage de vis mâle.

4. Procédé de l'une des revendications précédentes, dans lequel l'élément de fermeture par emboîtement (10) est monté sur le corps de couvercle (40) à l'aide d'une charnière.

5. Procédé de l'une des revendications précédentes, dans lequel l'élément de fermeture par emboîtement (10) et l'orifice (15) ont des surfaces externes coniques complémentaires.

6. Procédé de l'une des revendications précédentes, dans lequel l'élément structurel est un ou plusieurs parmi : un pieu pour supporter un pilier.

7. Procédé de l'une des revendications précédentes, dans lequel l'élément structurel est situé dans un environnement aquatique.

8. Procédé de la revendication 1, dans lequel la couche de protection mécanique externe reste sensiblement in situ lors de l'inspection de l'élément structurel sous-jacent.

9. Procédé de l'une des revendications précédentes, dans lequel le corps de couvercle a une dimension maximale inférieure à 300 mm.

10. Procédé de l'une des revendications précédentes, dans lequel le corps de couvercle (40) est fixé à la couche de protection (50) au moyen : d'un soudage par friction ; d'un soudage thermique ; d'une liaison ; d'un collage ; ou d'un cerclage.

11. Composant structurel comprenant :
un élément structurel ;
une couche de protection (50) pour protéger l'élément structurel contre la corrosion, la couche de protection (50) couvrant au moins une partie de l'élément structurel, où la couche de protection (50) comporte une ouverture (52), l'ouverture (52) étant entourée par la couche de protection (50) ; et
un ensemble couvercle (5) monté sur l'ouverture (52) et sur au moins une section de la couche de protection (50) adjacente à l'ouverture (52),
dans lequel :
l'ensemble couvercle (5) comporte un corps de couvercle (40) ayant un orifice (15) et un élément de fermeture (10) agencé pour s'emboîter avec l'orifice (15) ;
l'élément de fermeture (10) peut s'emboîter avec l'orifice (15) pour empêcher l'entrée de fluide à travers le trou (52) vers l'élément structurel ; et
l'élément de fermeture (10) peut être retiré de l'orifice (15) pour fournir un accès à l'élément structurel par l'intermédiaire de l'ouverture (52) dans la couche de protection (50),
dans lequel la couche de protection (50) comprend une couche de protection contre la corrosion formée sur l'élément structurel et une couche de protection mécanique formée sur la couche de protection contre la corrosion ; et **caractérisé en ce que** :
le corps de couvercle (40) comprend le même matériau que la couche de protection mécanique.
